# EUROPEAN PATENT APPLICATION

(11) **EP 2 226 555 A2**
(43) Date of publication of application: **08.09.2010**
(21) Application number: 10154315.5
(22) Date of filing: 23.02.2010
(51) Int. Cl.: F21V 7/00, B60Q 1/00, F21W 101/10

(54) **Vehicular headlamp**

(30) Priority: 03.03.2009 JP 2009049710
(71) Applicant: Koito Manufacturing Co., Ltd., Tokyo 108-8711 (JP)
(72) Inventor: Ugajin, Yuta, Shizuoka-shi Shizuoka 424-8764 (JP); Nakada, Yusuke, Shizuoka-shi Shizuoka 424-8764 (JP)
(74) Representative: Grünecker, Kinkeldey, Stockmair & Schwanhäusser Anwaltssozietät

(57) **Abstract**

A vehicular headlamp (10) has: a first lamp unit (20) includes a first reflector (26) that reflects light, coming from a first semiconductor light-emitting device (22), toward a front; and a second lamp unit (40) includes a second reflector (46) that reflects light, coming from a second semiconductor light-emitting device (42), toward the front. A light-emitting region of the first lamp unit (20) and a light-emitting region of the second lamp unit (40) arc arranged so as to be spaced apart from each other. A first reflective surface (27a) provided outside of an effective reflective surface (26a) of the first reflector (26) reflects light, coming from the first semiconductor light-emitting device (22), toward the second lamp unit (40). A second reflective surface (50) provided between the first lamp unit (20) and the second lamp unit (40) reflects reflected light, coming from the first reflective surface (27a), toward the front.

## Description

### BACKGROUND OF THE INVENTION

### 1. Field of the Invention

The invention relates to a vehicular headlamp and, more particularly, to a vehicular headlamp that superimposes rays of light emitted from a plurality of lamp units to form a predetermined distribution pattern.

### 2. Description of the Related Art

In a vehicular headlamp, it may be necessary to form a distribution pattern with high accuracy. The distribution pattern is, for example, formed by an optical system that uses a reflection mirror, a lens, or the like. In addition, there is also proposed a vehicular headlamp that superimposes rays of light emitted from a plurality of lamp units to form a predetermined distribution pattern.

However, in the vehicular headlamp that superimposes rays of light emitted from a plurality of lamp units to form a predetermined distribution pattern, there is a non-lighting portion between the lamp units, so a pedestrian, or the like, recognizes the respective lamp units as separate light-emitting portions. Therefore, the vehicular headlamp that superimposes rays of light emitted from a plurality of lamp units to form a distribution pattern may decrease in visibility of the lamp as a whole.

Then, Japanese Patent Application Publication No. 2007-305575 (JP-A-2007-305575) describes a vehicular lamp. The vehicular lamp includes an additional optical unit between a first unit (first lamp unit) and a second unit (second lamp unit), which are a plurality of lamp units. The additional optical unit irradiates light, irradiated from at least one of the first unit and the second unit, forward. The light-emitting region of the additional optical unit connects the light-emitting region of the first unit with the light-emitting region of the second unit. By so doing, these light-emitting regions are visually recognized as one light-emitting region as a whole.

However, in the vehicular lamp described in JP-A-2007-305575, an additional reflector for reflecting light, coming from the light source of the first unit, to the additional optical unit is arranged in front of the upper front end of a first main reflector of the first unit. Then, there is a possibility that the additional reflector located in an effective reflective surface of the first unit influences the light distribution of the first unit.

### SUMMARY OF THE INVENTION

The invention provides a vehicular headlamp that improves the visibility of the lamp as a whole using a plurality of lamp units, and that is able to obtain a desirable light distribution.

An aspect of the invention relates to a vehicular headlamp. The vehicular headlamp includes: a first lamp unit that includes a projection lens that is arranged so as to have an optical axis extending in a vehicular longitudinal direction, a first light source that is arranged on a rear side with respect to a rear side focal point of the projection lens, a first reflector that reflects light, irradiated from the first light source, toward a front, and a first reflective surface that is provided outside of an effective reflective surface of the first reflector and that reflects light, coming from the first light source, toward the second lamp unit; a second lamp unit that includes a second light source, and a second reflector that reflects light, irradiated from the second light source, toward the front; and a second reflective surface that is provided between the first lamp unit and the second lamp unit and that reflects reflected light, coming from the first reflective surface, toward the front. In the vehicular headlamp, the first lamp unit and the second lamp unit are arranged so that a light-emitting region (S1) of the first lamp unit and a light-emitting region (S2) of the second lamp unit are spaced apart from each other.

With the above configuration, the second reflective surface is provided between the first lamp unit and the second lamp unit, and light coming from the first light source is reflected on the first reflective surface toward the second reflective surface. By so doing, the light-emitting region of the first lamp unit and the light-emitting region of the second lamp unit, which are spaced apart from each other, are visually recognized as one light-emitting region as a whole by the light-emitting region of the second reflective surface. Then, a pedestrian, or the like, is able to recognize the plurality of lamp units as one light-emitting portion. Furthermore, the first reflective surface is provided outside of the effective reflective surface of the first reflector, so the first reflective surface does not influence the light distribution of the first lamp unit.

In the vehicular headlamp according to the above aspect, the second reflective surface may be arranged so that a light-emitting region of the second reflective surface connects the light-emitting region of the first lamp unit with the light-emitting region of the second lamp unit to be visually recognized as one light-emitting region as a whole, or the light-emitting region of the second reflective surface may be a region on which the second reflective surface reflects reflected light, coming from the first reflective surface, toward the front.

In the vehicular headlamp according to the above aspect, the light-emitting region of the first lamp unit may be a region from which the first lamp unit emits light outward toward the front, and the light-emitting region of the second lamp unit may be a region from which the second lamp unit emits light outward toward the front.

In the vehicular headlamp according to the above aspect, the second reflective surface may be arranged so that a region on which the second reflective surface reflects reflected light, coming from the first reflective surface, toward the front is located between the first region and the second region as viewed from the front.

In the headlamp according to the above aspect, the light irradiated from the first light source may be reflected on the effective reflective surface and reach the projection lens.

In the headlamp according to the above aspect, a distance from an optical axis of the projection lens to the first reflective surface may be larger than a distance from the optical axis of the projection lens to the effective reflective surface, and the first reflective surface may be provided at a side of the effective reflective surface in a vehicular widthwise direction.

In the headlamp according to the above aspect, a vertical cross-section of the effective reflective surface may be substantially elliptical.

Note that in the vehicular headlamp according to the above aspect, the first lamp unit may include a shade that is arranged between the projection lens and the first light source, wherein a front edge of the shade is located near a vehicle rear side focal point of the projection lens to shield part of reflected light coming from the first reflector to thereby form a cut-off line of a distribution pattern, and an upper surface of the shade extending from the front edge toward a rear reflects part of reflected light, coming from the first reflector, upward, and a transmissive hole through which reflected light irradiated from the first reflective surface passes toward the second reflective surface, may be provided at a side portion of the upper surface of the shade and allows.

With the above configuration, even in the case of a projector-type lamp unit that includes a shade which forms a cut-off line of the distribution pattern and the upper surface of which reflects part of reflected light, coming from the first reflector, upward, light reflected on the first reflective surface may be irradiated to the second reflective surface through the transmissive hole provided at the side portion of the upper surface of the shade. Then, the layout flexibility of the second reflective surface improves, so the lamp as a whole may be compact.

In addition, in the headlamp according to the above aspect, the first reflective surface may be provided at each of both sides of the effective reflective surface in a vehicular widthwise direction, or the transmissive hole may be provided at each of both sides of the upper surface of the shade in the vehicular widthwise direction.

With the above configuration, the first reflective surface and the transmissive hole, which correspond to each of the second reflective surfaces of the right headlamp and left headlamp attached respectively to the left front and right front of the vehicle, are provided at both left and right sides of the first reflector and shade. Then, the same first lamp unit that includes these first reflector and shade may be used for the left and right vehicular headlamps.

With the vehicular headlamp according to the aspect of the invention, a pedestrian, or the like, is able to recognize the plurality of lamp units as one light-emitting portion. Furthermore, the first reflective surface does not influence the light distribution of the first lamp unit. Therefore, the visibility of the lamp as a whole is improved using the plurality of lamp units, while it is possible to obtain a desirable light distribution.

### BRIEF DESCRIPTION OF THE DRAWINGS

The foregoing and further objects, features and advantages of the invention will become apparent from the following description of example embodiments with reference to the accompanying drawings, wherein like numerals are used to represent like elements and wherein:
FIG 1 is a front view that shows a vehicular headlamp according to an embodiment of the invention;
FIG. 2 is a cross-sectional view of the vehicular headlamp, taken along the line II-II in FIG 1;
FIG. 3 is a cross-sectional view of the vehicular headlamp, taken along the line III-III in FIG. 1;
FIG. 4 is a cross-sectional view of the vehicular headlamp, taken along the line IV-IV in FIG. 1;
FIG. 5 is an enlarged cross-sectional view of a first lamp unit shown in FIG. 3;
FIG 6 is a bottom view of a first reflector shown in FIG. 2;
FIG. 7 is a top view of a shade shown in FIG. 2;
FIG 8A is a view for illustrating the visibility of the vehicular headlamp when a second reflective surface is provided between the first lamp unit and a second lamp unit; and
FIG 8B is a view for illustrating the visibility of the vehicular headlamp when no second reflective surface is provided.

### DETAILED DESCRIPTION OF EMBODIMENTS

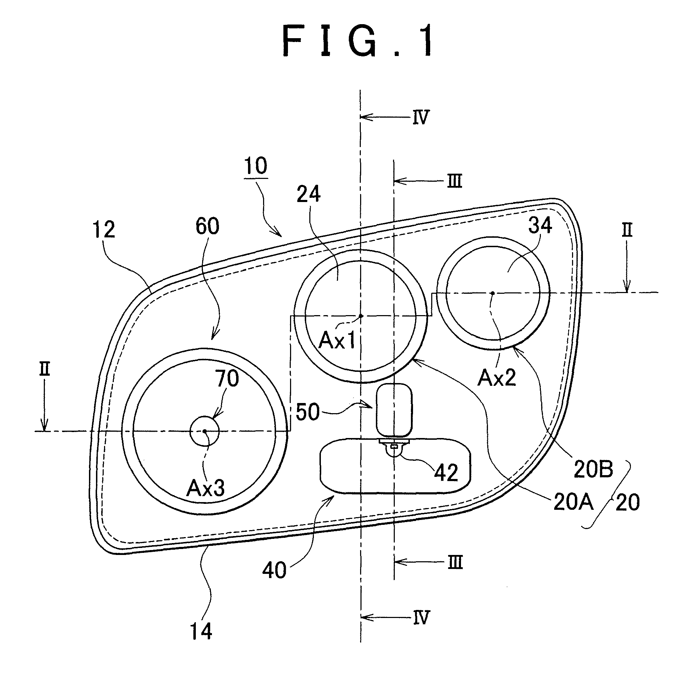

Hereinafter, an embodiment of the invention will be described in detail with reference to the accompanying drawings. A vehicular headlamp 10 according to the present embodiment is a lamp that is, for example, attached to a front end of a vehicle and that is able to turn on or off by selectively switching between an upper beam and a lower beam. In FIG 1, a headlamp unit attached to the left front of the vehicle, such as an automobile, is, for example, shown as the vehicular headlamp 10.

As shown in FIG 1 to FIG 3, the vehicular headlamp 10 includes a light translucent cover 12 and a lamp body 14. Then, three lamp units (a first lamp unit 20, a second lamp unit 40 and a third lamp unit 60) are fixedly arranged in a lamp chamber 10a surrounded by the translucent cover 12 and the lamp body 14. In addition, extensions 16 are arranged between the three lamp units 20, 40, 60 and the translucent cover 12 so as to cover gaps when viewed from the front of the lamp.

The first lamp unit 20 and the second lamp unit 40 are fixed to a support member 115 via an aiming mechanism (not shown). The support member 15 is tiltable with respect to the lamp body 14. The third lamp unit 60 is fixed to the lamp body 14 via an aiming mechanism 18. Then, each lamp unit is able to adjust the optical axis.

Next, the lamp units 20, 40, 60 will be described. The vehicular headlamp 10 according to the present embodiment superimposes rays of light emitted from the first lamp unit 20 and the second lamp unit 40 to form the distribution pattern of a lower beam, and uses light emitted from the third lamp unit 60 to form the distribution pattern of an upper beam.

Hereinafter, first, the first lamp unit 20 will be described. The first lamp unit 20 together with the second lamp unit 40, which will be described later, forms the distribution pattern of the lower beam. As shown in FIG. 1, a first subunit 20A and a second subunit 20B are provided side by side in a widthwise direction at a bracket portion in the upper side of the support member 15.

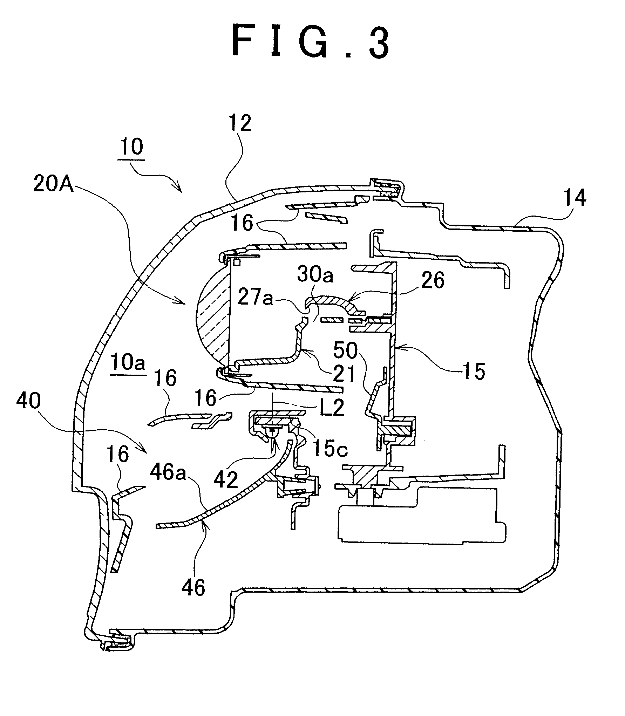

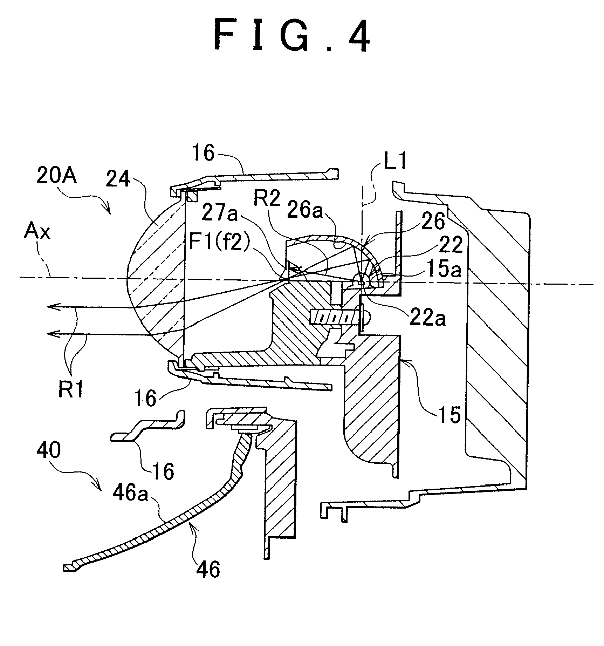

As shown in FIG. 3 and FIG. 4, the first subunit 20A includes a first projection lens 24, a first semiconductor light-emitting device 22, a first reflector 26, and a first shade (shade) 21. The first projection lens 24 is arranged on a first optical axis (optical axis) Ax1 that extends in a vehicular longitudinal direction. The first semiconductor light-emitting device 22 is arranged on a rear side with respect to a rear side focal point F1 of the first projection lens 24, and is an example of a first light source. The first reflector 26 collects and reflects light, irradiated from the first semiconductor light-emitting device 22, toward a front to the first optical axis Ax1. The first shade 21 is arranged between the first projection lens 24 and the first semiconductor light-emitting device 22. The front edge of the first shade 21 is located near the rear side focal point F1 of the first projection lens 24 to shield part of reflected light R1 coming from the first reflector 26 and part of direct light coming from the first semiconductor light-emitting device 22 to form a cut-off line of the distribution pattern. The horizontal surface (upper surface) 21b of the first shade 21 reflects part of reflected light, coming from the first reflector 26, upward. The horizontal surface 21b extends toward a rear from the front edge.

The first semiconductor light-emitting device 22 is a white light-emitting diode that has a light-emitting portion (light-emitting chip) 22a having a size of about 1 square millimeter. The first semiconductor light-emitting device 22 is mounted on a support surface 15a of the support member 15 so that the irradiation axis L1 is oriented in a substantially vertically upward direction that is substantially vertical to a direction in which the first subunit 20A irradiates light (leftward direction in FIG. 4). Note that the light-emitting portion 22a may be arranged at a slight angle depending on the shape of the light-emitting portion or the light distribution irradiated toward the front. In addition, a plurality of light-emitting portions (light-emitting chips) may be provided in one semiconductor light-emitting device.

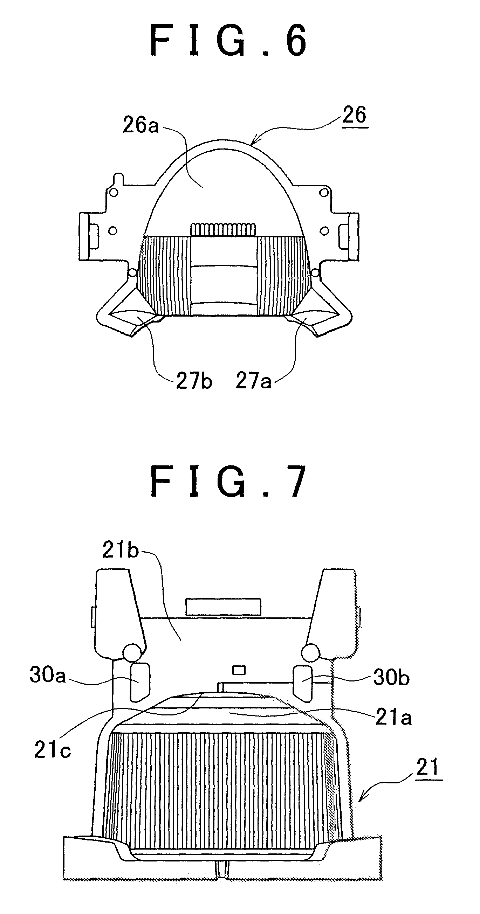

As shown in FIG 4 and FIG 6, the first reflector 26 according to the present embodiment is a reflective member inside which a reflective surface 26a is formed. The vertical cross-sectional shape of the reflective surface 26a is a substantially elliptical shape, and the horizontal cross-sectional shape thereof is a free-form surface shape based on an ellipse. The first reflector 26 is designed and arranged so that the first focal point f1 is located adjacent to the light-emitting portion 22a of the first semiconductor light-emitting device 22 and the second focal point f2 is located adjacent to a ridge line 21c formed by the curved surface 21a and horizontal surface 21b of the first shade 21.

Furthermore, as shown in FIG. 6, the first reflector 26 has a pair of first reflective surfaces 27a and 27b outside an effective reflective surface (reflective surface 26a) of the first reflector 26. The pair of first reflective surfaces 27a and 27b reflect light R3, irradiated from the first semiconductor light-emitting device 22, toward the second lamp unit 40 arranged on the lower side. Here, the distance from the optical axis Ax to the first reflective surface 27a or 27b is larger than the distance from the optical axis Ax to the effective reflective surface. In addition, the first reflective surfaces 27a and 27b according to the present embodiment are formed of flat surfaces that are respectively provided at both left and right sides at the front end, which is the outside of the effective reflective surface of the first reflector 26.

In addition, as shown in FIG 7, the first shade 21 has a block shape and also serves as a support frame of the first projection lens 24. The first shade 21 is formed so that the front edge 21c is located near the rear side focal point F1 of the first projection lens 24 to shield part of reflected light R1 coming from the first reflector 26 to thereby form the cut-off line of the distribution pattern and, in addition, the horizontal surface 21b extending rearward from the front edge 21c reflects part of reflected light R1, coming from the first reflector 26, upward. The horizontal surface 21b has a light control surface to which reflective surface treatment is applied.

The front edge 21c of the first shade 21 is formed in a curved shape so that both left and right sides in plan view protrude forward so as to be matched with the curvature of field of the first projection lens 24. The curved front edge 21c coincides with the group of focal points of the first projection lens 24. That is, the first shade 21 is formed so that the front edge 21c is formed along the group of focal points of the first projection lens 24 and the shape of the front edge 21c has a cut-off line shape as it is.

Furthermore, the first shade 21 uses the horizontal surface 21b to reflect part of reflected light R1, coming from the first reflector 26, upward to thereby convert a majority of light emitted upward from the first projection lens 24 into light emitted downward from the first projection lens 24. By so doing, the first shade 21 improves the luminous flux utilization factor of light emitted from the first semiconductor light-emitting device 22.

Then, light R1 emitted from the light-emitting portion 22a of the first semiconductor light-emitting device 22 is reflected on the reflective surface 26a of the first reflector 26 and reaches the first projection lens 24 through the vicinity of the second focal point f2. In addition, in the first subunit 20A, part of light is reflected on the horizontal surface 21b with the front edge 21c of the first shade 21 used as a border line to selectively cut light to thereby form an oblique cut-off line in the distribution pattern projected toward the front of the vehicle. That is, the front edge 21c constitutes the terminator of the first subunit 20A.

Note that part of light R1 that is reflected on the reflective surface 26a of the first reflector 26 and further reflected on the horizontal surface 21b of the first shade 21 is also irradiated toward the front as effective light. Thus, in the present embodiment, the horizontal surface 21b of the first shade 21 adjacent to the front of the vehicle has an optical shape for which reflection angle is set in appropriate consideration of the positional relationship between the first projection lens 24 and the first reflector 26.

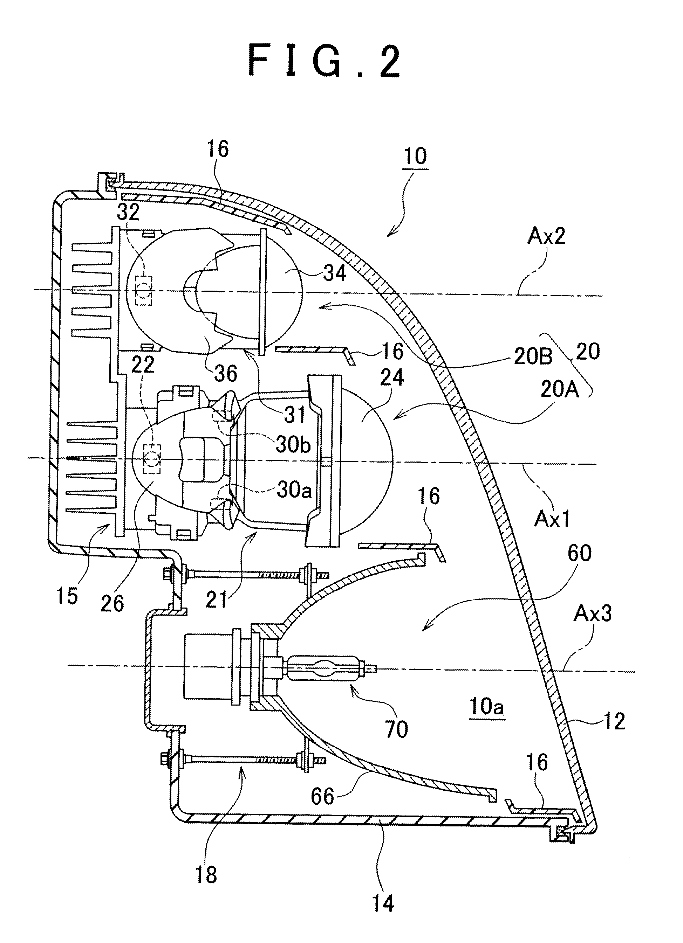

Furthermore, as shown in FIG. 2 and FIG. 7, transmissive holes 30a and 30b are respectively formed at both left and right sides of the horizontal surface 21b of the first shade 21 in order to allow reflected light R3, reflected on the first reflective surfaces 27a and 27b toward the second lamp unit 40 arranged below the first shade 21, to pass therethrough.

The first projection lens 24 is a convex aspherical lens that projects light, reflected on the reflective surface 26a of the first reflector 26, toward the front of the vehicle. The first projection lens 24 is fixed to the distal end of the first shade 21 adjacent to the front of the vehicle. In the present embodiment, the rear side focal point F1 of the first projection lens 24 substantially coincides with the second focal point f2 of the first reflector 26. Thus, light that is reflected on the first reflector 26 and that reaches the first projection lens 24 is projected far toward the front of the vehicle in form of substantially parallel rays of light. That is, the first subunit 20A of the first lamp unit 20 according to the present embodiment constitutes a projector-type light source unit for forming a collection cut.

As shown in FIG 2, the second subunit 20B according to the present embodiment has a substantially similar configuration to that of the first subunit 20A. The second subunit 20B includes a second projection lens 34, a semiconductor light-emitting device 32, a reflector 36, and a second shade 31. The second projection lens 34 is arranged on a second optical axis Ax2 extending in the vehicular longitudinal direction and has a smaller rear side focal distance than that of the first projection lens 24. The semiconductor light-emitting device 32 is arranged on the rear side with respect to the rear side focal point F2 of the second projection lens 34 and has a similar configuration to that of the first semiconductor light-emitting device 22. The reflector 36 collects and reflects light, irradiated from the semiconductor light-emitting device 32, toward the front to the second optical axis Ax2. The second shade 31 is arranged between the second projection lens 34 and the semiconductor light-emitting device 32. The second shade 31 shields part of reflected light coming from the reflector 36 and part of direct light coming from the semiconductor light-emitting device 32 to form a cut-off line of the distribution pattern. The horizontal surface of the second shade 31, extending rearward from the front edge, reflects part of reflected light, coming from the reflector 36, upward. That is, the second subunit 20B of the first lamp unit 20 constitutes a projector-type light source unit for forming a diffusion cut.

Next, the second lamp unit 40 will be described. The second lamp unit 40 is a light source unit that forms the distribution pattern of the lower beam together with the above described first lamp unit 20. The second lamp unit 40 is arranged below the first lamp unit 20. As shown in FIG. 3 to FIG. 5, the second lamp unit 40 includes a second semiconductor light-emitting device 42 and a second reflector 46. The second semiconductor light-emitting device 42 is an example of a second light source that is fixedly arranged on the support surface 15c of the support member 15. The second reflector 46 reflects light, irradiated from the second semiconductor light-emitting device 42, toward the front.

The second semiconductor light-emitting device 42, as well as the first semiconductor light-emitting device 22, is a white diode having a light-emitting portion 42a. The second semiconductor light-emitting device 42 is mounted on the support surface 15c of the support member 15 so that the irradiation axis L2 is oriented in a substantially vertically downward direction that is substantially vertical to a direction in which the second lamp unit 40 irradiates light (leftward direction in FIG 3).

The second reflector 46 is a reflective member inside which a reflective surface 46a is formed. The reflective surface 46a has a substantially paraboloid of revolution, having a focal point near the light-emitting portion 42a, as a reference surface. Light R2 emitted from the light-emitting portion 42a of the second semiconductor light-emitting device 42 is reflected on the reflective surface 46a of the second reflector 46, and is diffused and irradiated to around the front of the vehicle. That is, the second lamp unit 40 according to the present embodiment constitutes a parabolic light source unit for peripheral vision. The second lamp unit 40 uses the semiconductor light-emitting device as a light source.

Then, in the present embodiment, the vehicular headlamp 10, including the second lamp unit 40, is attached to each of the left and right sides of the vehicle, and the respective second lamp units 40 irradiate diffusion light to left and right toward the front of the vehicle for forming peripheral zone forming patterns. Thus, it is possible to expand a peripheral visual field of a road surface, or the like, ahead of the vehicle without giving a glare to an oncoming vehicle or a pedestrian.

Next, the third lamp unit 60 is a light source unit that forms the distribution pattern of the upper beam. The third lamp unit 60 includes a reflector 66 and a discharge bulb 70. The reflector has a shape of substantially paraboloid of revolution. The third optical axis Ax3 of the reflector 66 is tiltable by the aiming mechanism 18. The discharge bulb 70 is detachably attached to a bulb fitting hole that is provided at the center of the rear portion of the reflector 66. That is, the third lamp unit 60 according to the present embodiment constitutes a parabolic light source unit that uses a light-emitting bulb as a light source.

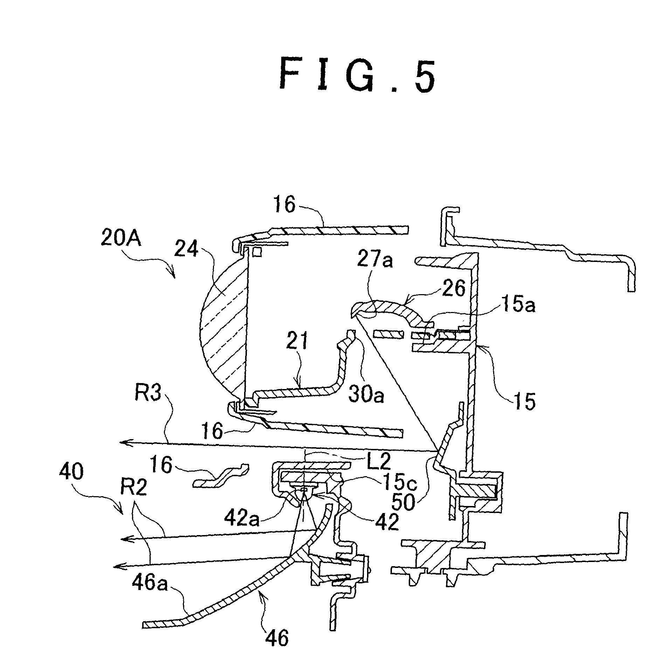

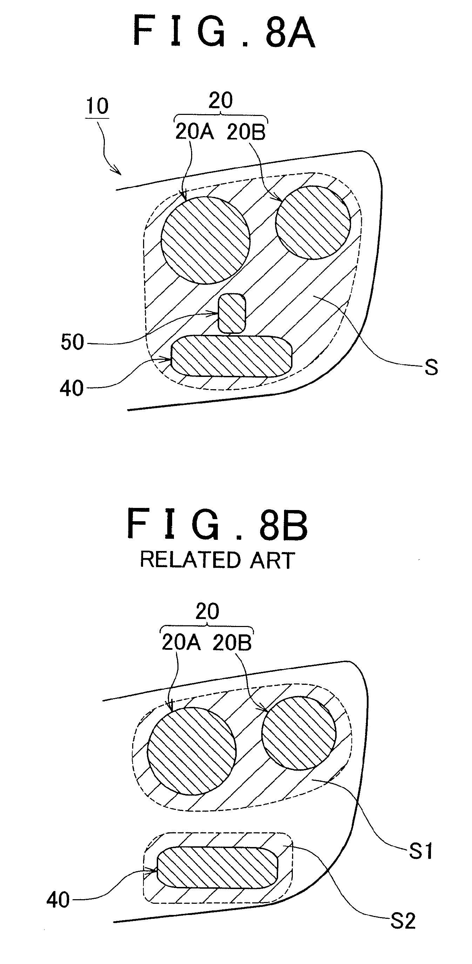

Furthermore, in the present embodiment, as shown in FIG. 3 and FIG. 5, a second reflective surface 50 is provided between the first lamp unit 20 and the second lamp unit 40 that are arranged so that the light-emitting regions are vertically spaced apart from each other. As shown in FIG. 8A, the second reflective surface 50 is arranged so that the light-emitting region of the second reflective surface 50 connects the light-emitting region (first region) S1 of the first lamp unit 20 with the light-emitting region (second region) S2 of the second lamp unit 40 and then the light-emitting regions are visually recognized as one light-emitting region S as a whole. The light-emitting regions S1 and S2 of the respective first lamp unit 20 and second lamp unit 40 are regions from which the first lamp unit 20 and the second lamp unit 40 respectively emit light outward toward the front of the vehicle. The light-emitting region of the second reflective surface 50 is a region on which the second reflective surface 50 reflects radiated light, coming from at least one of the first reflective surfaces 27a and 27b, toward the front of the vehicle. The light-emitting region of the second reflective surface 50 is located between the light-emitting region S1 and the light-emitting region S2 as viewed from the front of the vehicle.

Then, the second reflective surface 50 having a free-form surface is able to reflect radiated light R3, passing through the transmissive hole 30a provided at the right side portion of the horizontal surface 21b of the first shade 21 and coming from the first reflective surface 27a, toward the front. Note that the vehicular headlamp 10 according to the present embodiment is a headlamp unit attached to the left front of the vehicle, so the second reflective surface 50 is configured to reflect radiated light R3, coming from the first reflective surface 27a, toward the front; however, when the vehicular headlamp is a head lamp unit attached to the right front of the vehicle, the second reflective surface 50 is configured to reflect radiated light R3, coming from the first reflective surface 27b, toward the front.

In the vehicular headlamp 10 according to the above described present embodiment, the second reflective surface 50 that reflects radiated light R3, coming from the first reflective surface 27a, toward the front is provided between the first lamp unit 20 and the second lamp unit 40. By so doing, as shown in FIG. 8A, the light-emitting region S1 of the first lamp unit 20 and the light-emitting region S2 of the second lamp unit 40, which are spaced apart from each other, are visually recognized as one light-emitting region S as a whole owing to the light-emitting region of the second reflective surface 50. That is, as shown in FIG 8B, when no second reflective surface 50 is provided between the first lamp unit 20 and the second lamp unit 40, a pedestrian, or the like, recognizes the light-emitting region S1 of the first lamp unit 20 and the light-emitting region S2 of the second lamp unit 40 as separate light-emitting portions.

Thus, with the vehicular headlamp 10 according to the present embodiment, a pedestrian, or the like, is able to recognize the first lamp unit 20 and the second lamp unit 40, which are a plurality of lamp units, as one light-emitting portion, so recognizability of the lamp as a whole improves. Furthermore, as shown in FIG. 5 and FIG. 6, the first reflective surfaces 27a and 27b are respectively provided at both left and right sides (both sides in a vehicular widthwise direction) at the front end, which is the outside of the effective reflective surface of the first reflector 26. Then, the first reflective surfaces 27a and 27b do not shield reflected light R1 coming from the first reflector 26, to which light irradiated from the first semiconductor light-emitting device 22 is collected and reflected toward the front to the first optical axis Ax1, and does not influence the light distribution of the first subunit 20A in the first lamp unit 20. Thus, the vehicular headlamp 10 uses the first lamp unit 20 and the second lamp unit 40, which are a plurality of lamp units, while improving the visibility of the lamp as a whole, and is able to provide a desirable light distribution.

In addition, the first shade 21 according to the present embodiment has the transmissive holes 30a and 30b at both left and right sides of the horizontal surface 21b that is used to reflect part of reflected light, coming from the first reflector 26, upward in order to allow reflected light R3, reflected on the first reflective surfaces 27a and 27b toward the second lamp unit 40 arranged below the first shade 21, to pass therethrough. That is, it is possible to irradiate light R3, reflected on the first reflective surfaces 27a and 27b, to the second reflective surface 50 through these transmissive holes 30a and 30b. Then, the vehicular headlamp 10 has a high flexibility in layout of the second reflective surface 50, so the lamp as a whole may be compact.

In addition, in the first reflector 26 and the first shade 21 according to the present embodiment, the first reflective surface 27a and the transmissive hole 30a, which correspond to the second reflective surface 50 of the vehicular headlamp 10 that is a left headlamp attached to the left front of the vehicle, are provided at the right sides of the first reflector 26 and first shade 21, and the first reflective surface 27b and the transmissive hole 30b, which correspond to the second reflective surface 50 of the vehicular headlamp (not shown) that is a right headlamp attached to the right front of the vehicle, are provided at the left sides of the first reflector 26 and first shade 21. Then, the same first subunit 20A in the first lamp unit 20 that includes these first reflector 26 and first shade 21 may be used for the left and right vehicular headlamps.

Note that in the vehicular headlamp 10 according to the present embodiment, the first light source of the first lamp unit 20 and the second light source of the second lamp unit 40 are respectively formed of the first semiconductor light-emitting device 22 and the second semiconductor light-emitting device 42. The semiconductor light-emitting devices 22 and 42, such as light-emitting diodes (LEDs) generally having a small size and low power consumption, are used as the light sources of the vehicular headlamp 10. By so doing, it is possible to effectively use limited power. The first light source and second light source of the vehicular headlamp according to the aspect of the invention may be a discharge bulb, such as a metal halide bulb that uses a discharge light-emitting portion as a light source, a halogen bulb, or the like. The vehicular headlamp according to the aspect of the invention is further effective when a plurality of lamp units that use semiconductor light-emitting devices, having a lower luminous intensity than that of a light-emitting bulb as light sources, for a lower beam.

While some embodiments of the invention have been illustrated above, it is to be understood that the invention is not limited to details of the illustrated embodiments, but may be embodied with various changes, modifications or improvements, which may occur to those skilled in the art, without departing from the scope of the invention.

## Claims

1. A vehicular headlamp (10) **characterized by** comprising:
a first lamp unit (20) that includes a projection lens (24) that is arranged so as to have an optical axis extending in a vehicular longitudinal direction, a first light source (22) that is arranged on a rear side with respect to a rear side focal point of the projection lens, a first reflector (26) that reflects light, irradiated from the first light source, toward a front, and a first reflective surface (27a) that is provided outside of an effective reflective surface (26a) of the first reflector and that reflects light, coming from the first light source, toward the second lamp unit;
a second lamp unit (40) that includes a second light source (42), and a second reflector (46) that reflects light, irradiated from the second light source, toward the front; and
a second reflective surface (50) that is provided between the first lamp unit and the second lamp unit and that reflects reflected light, coming from the first reflective surface, toward the front, wherein
the first lamp unit and the second lamp unit are arranged so that a light-emitting region (S1) of the first lamp unit and a light-emitting region (S2) of the second lamp unit are spaced apart from each other.

2. The vehicular headlamp according to claim 1, wherein the second reflective surface is arranged so that a light-emitting region of the second reflective surface connects the light-emitting region of the first lamp unit with the light-emitting region of the second lamp unit to be visually recognized as one light-emitting region as a whole.

3. The vehicular headlamp according to claim 2, wherein the light-emitting region of the second reflective surface is a region on which the second reflective surface reflects reflected light, coming from the first reflective surface, toward the front.

4. The vehicular headlamp according to any one of claims 1 to 3, wherein
the light-emitting region of the first lamp unit is a region from which the first lamp unit emits light outward toward the front, and
the light-emitting region of the second lamp unit is a region from which the second lamp unit emits light outward toward the front.

5. The vehicular headlamp according to any one of claims 1 to 4, wherein the second reflective surface is arranged so that a region on which the second reflective surface reflects reflected light, coming from the first reflective surface, toward the front is located between the first region and the second region as viewed from the front.

6. The vehicular headlamp according to any one of claims 1 to 6, wherein the light irradiated from the first light source is reflected on the effective reflective surface and reaches the projection lens.

7. The vehicular headlamp according to any one of claims 1 to 6, wherein a distance from an optical axis of the projection lens to the first reflective surface is larger than a distance from the optical axis of the projection lens to the effective reflective surface.

8. The vehicular headlamp according to any one of claims 1 to 7, wherein the first reflective surface is provided at a side of the effective reflective surface in a vehicular widthwise direction.

9. The vehicular headlamp according to any one of claims 1 to 8, wherein a vertical cross-section of the effective reflective surface is substantially elliptical.

10. The vehicular headlamp according to any one of claims 1 to 9, wherein
the first lamp unit includes a shade that is arranged between the projection lens and the first light source, wherein a front edge of the shade is located near a vehicle rear side focal point of the projection lens to shield part of reflected light coming from the first reflector to thereby form a cut-off line of a distribution pattern, and an upper surface of the shade extending from the front edge toward a rear reflects part of reflected light, coming from the first reflector, upward, and
a transmissive hole through which reflected light irradiated from the first reflective surface passes toward the second reflective surface, is provided at a side portion of the upper surface of the shade and allows.

11. The vehicular headlamp according to claim 10, wherein:
the first reflective surface is provided at each of both sides of the effective reflective surface in a vehicular widthwise direction; and
the transmissive hole is provided at each of both sides of the upper surface of the shade in the vehicular widthwise direction.
